# FASCICULE DE BREVET EUROPEEN

(11) **EP 3 976 937 B1**
(45) Date de publication et mention de la délivrance du brevet: **29.11.2023**
(21) Numéro de dépôt: 20737254.1
(22) Date de dépôt: 20.05.2020
(51) Int. Cl.: F01D 25/18, B01D 45/14

(54) **PIECE POUR DEGAZEUR CENTRIFUGE DE TURBOMACHINE AVEC PAROIS LONGITUDINALES ADAPTEES**
TEIL FÜR EINEN TURBOMASCHINENZENTRIFUGALENTGASER MIT ANGEPASSTEN LONGITUDINALEN WÄNDEN
PART FOR TURBOMACHINE CENTRIFUGAL DEAERATOR WITH ADAPTED LONGITUDINAL WALLS

(30) Priorité: 24.05.2019 FR 1905487
(43) Date de publication de la demande: 06.04.2022
(73) Titulaire: Safran Helicopter Engines, 64510 Bordes (FR)
(72) Inventeur: NIFENECKER, Arnaud, Georges, 77550 MOISSY-CRAMAYEL (FR); FULLERINGER, Benjamin, Nicolas, 77550 MOISSY-CRAMAYEL (FR); HERRAN, Nicolas, Maurice, Marcel, 77550 MOISSY-CRAMAYEL (FR)
(74) Mandataire: Gevers & Orès
(86) Numéro de dépôt international: PCT/FR2020/050836
(87) Numéro de publication internationale: WO 2020/240116

(56) Documents cités:
- EP-A1- 3 112 031
- FR-A1- 3 071 418
- US-A1- 2013 195 608

## Description

### Domaine technique de l'invention

L'invention concerne notamment un dégazeur centrifuge de turbomachine.

### Arrière-plan technique

L'arrière-plan technique comprend notamment les documents FR-A1-3 071 418, EP-A1-3 112 031 et US-A1-2013/195608.

Les turbomachines sont des systèmes complexes qui mettent en oeuvre un certain nombre d'ensembles tournants (turbines, compresseur, etc.) qui doivent être équipés de dispositifs d'étanchéité. Ces dispositifs d'étanchéité sont en général réalisés par des labyrinthes d'air pressurisé aménagés au voisinage des ensembles tournants. Pour ce faire, un air est prélevé directement dans la veine d'air de la turbomachine. Cet air transite ensuite dans la turbomachine par les différents labyrinthes prévus à cet effet, puis est évacué vers l'extérieur de la turbomachine pour limiter la montée en pression des autres zones de la turbomachine, notamment le réducteur, la boite d'accessoires, etc. Cet air ayant transité par différentes zones de la turbomachine est chargé en huile utilisée pour le refroidissement et la lubrification des paliers et des pignons des ensembles tournants. Pour éviter le rejet d'air chargé d'huile, atténuer l'impact écologique des turbomachines, réduire la consommation d'huile et limiter les opérations de remplissage des réserves d'huile, il est important de prévoir des dégazeurs qui permettent de séparer l'huile de l'air avant d'évacuer l'air vers l'extérieur de la turbomachine.

Un tel dégazeur est en général agencé et entrainé par une prise de puissance mécanique au niveau de la boite d'accessoires ou du réducteur de la turbomachine.

De manière connue, un tel dégazeur centrifuge comprend une ou plusieurs enceinte(s) de séparation centrifuge du mélange air/huile agencée(s) autour d'un arbre creux et délimitée(s) par une paroi annulaire externe et une paroi annulaire interne. Le dégazeur comprend en outre une entrée axiale d'alimentation de l'enceinte avec le mélange air/huile, et une sortie d'huile périphérique ménagée dans la paroi externe. Ainsi, lors de la mise en rotation du dégazeur, obtenue en général par l'intermédiaire d'un pignon de la boite d'accessoires ou du réducteur, l'huile est naturellement entrainée par force centrifuge vers la sortie d'huile ménagée en périphérie du dégazeur. Une sortie d'air déshuilé est en outre ménagée dans la paroi interne et reliée à l'arbre creux, ce qui permet d'évacuer l'air vers l'extérieur.

Certains dégazeurs, tels que celui décrit dans la demande WO-A1-2011/004023, comprennent en outre des filtres agencés dans l'enceinte du dégazeur pour améliorer le captage des gouttes d'huile et favoriser ainsi le déshuilage du mélange. En effet, les filtres augmentent la surface de contact disponible et améliorent donc la probabilité qu'une goutte d'huile transportée par le flux de mélange soit accrochée à une paroi. Ces filtres sont en général formés d'une mousse métallique, telle qu'une mousse commercialisée sous la dénomination Retimet^{®}.

Cependant les performances des dégazeurs connus sont en général handicapées par des pertes de charge internes qui sont dues à deux causes en particulier, les formes de la veine, comprenant l'enceinte de centrifugation, empruntée par le flux d'air en cours de déshuilage, et la présence de la mousse métallique.

En ce qui concerne les formes internes au dégazeur délimitant la veine empruntée par le flux d'air, le procédé de fabrication peut alors être limitant quant au potentiel de géométrie optimale à réaliser.

En ce qui concerne, la présence de mousse métallique, les pertes de charge sont dues au fait qu'à haute vitesse (par exemple pour des vitesses de l'ordre de 6000 tours/min), la surface frontale constituée par la mousse métallique agit comme un mur et le degré de pénétration des particules d'air dans la mousse est faible. De ce point de vue, les procédés de fabrication connus, intégrant par exemple une mousse déterminée, ne permettent pas le pilotage de la géométrie de la structure.

Il est alors complexe de trouver un couple solution technologique / moyen de production compatible des deux aspects que sont la minimisation des pertes et l'optimisation de la capacité de déshuilage.

Il existe donc un besoin d'améliorer la conception de l'enceinte de séparation centrifuge pour optimiser les performances de déshuilage tout en limitant la perte de charge au travers du dégazeur.

### Résumé de l'invention

A cet effet, l'invention concerne une pièce pour un dégazeur centrifuge d'un mélange air/huile de turbomachine, destinée à tourner autour d'un axe de symétrie, formant une enceinte annulaire de séparation centrifuge dudit mélange, l'enceinte formant une veine de passage de fluide dont une entrée est orientée axialement pour l'alimentation de l'enceinte avec ledit mélange, et dont une première sortie est orientée radialement vers l'intérieur pour la sortie de l'air déshuilé séparé dudit mélange, l'enceinte comportant en outre au moins une seconde sortie d'huile orientée radialement vers l'extérieur et destinée à évacuer l'huile séparée dudit mélange vers l'extérieur du dégazeur, caractérisée en ce que ladite enceinte comporte des parois longitudinales la traversant radialement, au moins l'une des surfaces desdites parois longitudinales présentant des structures de surface et/ou des ondulations agencées pour former des obstacles à un flux dudit mélange longeant la surface desdites parois longitudinales.

Les parois longitudinales s'étendent radialement et forment des ailettes qui entraînent le mélange en rotation lors de son passage dans l'enceinte de centrifugation. Par ailleurs, l'huile forme un brouillard de gouttelettes en suspension dans le mélange. Les gouttelettes, plus lourdes que l'air sont entraînées en périphérie par la force centrifuge mais une bonne partie d'entre elles est également captée par les parois longitudinales en rotation. Elles y forment alors un film d'huile qui s'écoule vers la périphérie de l'enceinte, puis vers les sorties d'évacuation, toujours sous l'effet de la force centrifuge. Les structures ou ondulations sur la surface des parois longitudinales ont deux fonctions. D'une part, elles améliorent la captation des gouttelettes d'huile en formant des obstacles sur lesquels vient buter le mélange ou en captant des gouttelettes ayant tendance à rebondir sur la paroi. D'autre part, elles peuvent également former des protections du film d'huile en faisant passer le flux d'air longeant la paroi au-dessus dudit film d'huile et ainsi en évitant qu'il n'emporte de l'huile déjà déposée sur paroi.

De préférence ladite pièce comporte une rangée annulaire desdites parois longitudinales formant, entre deux parois longitudinales successives, des passages du flux au travers de l'enceinte dans le sens axial, la distance entre les parois longitudinales étant inférieure à leur extension radiale.

En multipliant le nombre de parois longitudinales on maximise la probabilité qu'une goutte soit captée par l'une d'elles. Avantageusement, la surface des parois longitudinales peut présenter un état de surface rugueux, de manière à protéger un film d'huile du flux dudit mélange.

Les aspérités de rugosité peuvent d'une part éviter des rebonds de gouttelettes, d'autre part protéger le film d'huile présent dans les anfractuosités constituées entre les aspérités. La hauteur et le grammage des aspérités sont à adapter localement à l'épaisseur du film d'huile qui se constitue sur la paroi.

Dans un mode de réalisation préféré, les parois longitudinales forment des plaques minces présentant des ondulations dans le sens axial.

Les ondulations des parois longitudinales donnent une forme sinueuse aux compartiments entre deux parois, les gouttelettes du mélange dont le flux suit le compartiment dans la direction axiale sont ainsi plus facilement captées sur la surface des parois longitudinales.

De manière encore plus préférentielle, des canaux creusés sur au moins une des faces desdites parois longitudinales s'étendent radialement sur celle-ci, de manière à drainer un film d'huile vers une paroi périphérique externe de l'enceinte de centrifugation.

De plus, le film d'huile formé à l'intérieur des canaux est protégé du flux d'air longeant la paroi. A cet effet, la profondeur et la largeur des canaux peuvent être ajustées en fonction de la localisation dans l'enceinte de centrifugation, pour tenir compte de la quantité d'huile drainée localement par le film d'huile. Avantageusement, plusieurs canaux sont disposés entre deux pliures d'une ondulation.

De préférence, la seconde sortie d'huile comporte des orifices traversant une paroi périphérique externe de l'enceinte de centrifugation, positionnés dans chaque compartiment entre deux parois longitudinales au niveau des pliures entre deux ondulations.

Certaines parois longitudinales peuvent démarrer après les autres dans le sens axial, derrière l'entrée axiale.

Cela permet de ne pas saturer immédiatement les canaux radiaux avec de grosses gouttelettes. Cela permet aussi, lorsque les parois forment un réseau serré, de ne pas engorger l'entrée de l'enceinte de centrifugation et de diriger progressivement le flux de mélange dans les compartiments entre les parois, limitant ainsi les pertes de charge.

Avantageusement, une telle pièce est fabriquée d'une seule pièce, par exemple par fabrication additive.

La fabrication additive permet d'optimiser à la fois les formes de la partie structurelle, pour diriger le flux du fluide qui la traverse afin de minimiser les pertes de charge, et d'intégrer facilement une rangée annulaire de parois longitudinales qui viennent se loger dans l'espace adéquat de la veine, pour améliorer les performances de séparation de l'huile et de l'air.

L'invention concerne également une pièce telle que décrite précédemment, qui comprend une ou plusieurs des caractéristiques suivantes :
- l'enceinte comporte en outre paroi périphérique extérieure de forme générale cylindrique percée d'une pluralité d'orifices,
- la surface radialement interne de ladite paroi périphérique comporte des motifs en creux connectés à l'embouchure desdits orifices, de manière à drainer l'huile recueillie par ladite paroi périphérique vers lesdits orifices.

Les motifs en creux guident les gouttelettes d'huiles captées par la paroi périphérique vers les orifices d'évacuation et évitent ainsi la création de poches d'huile le long de cette paroi. De plus, ils créent des zones où l'huile plaquée contre la paroi et en cours d'évacuation est relativement protégée du flux d'air principal dans l'enceinte et limitent ainsi le risque que cette huile soit ré-entraînée vers la sortie de mélange déshuilé.

De préférence, l'enceinte est répartie en une rangée annulaire de compartiments séparés par des parois longitudinales, ladite paroi périphérique comportant au moins un orifice dans chaque compartiment.

Les parois longitudinales, parallèles à l'axe de symétrie, s'étendent radialement. Elles forment des ailettes qui entraînent le mélange d'air et d'huile en rotation dans l'enceinte. La séparation de l'enceinte en une pluralité de compartiments optimise le rendement du dégazeur pour une séparation par centrifugation.

Préférentiellement, chaque compartiment comporte une pluralité d'orifices, positionnés en des points où la distance radiale de la surface radialement interne de ladite paroi périphérique présente un maximum.

La distance radiale étant la distance à l'axe de symétrie autour duquel tourne l'ensemble, c'est naturellement vers ces points que se dirigent les gouttelettes d'huiles captées par la paroi périphérique en rotation.

La surface radialement interne de ladite paroi périphérique peut présenter des ondulations dans le sens circonférentiel et/ou axial à l'intérieur de chaque compartiment.

Le pas desdites ondulations et/ou leur amplitude radiale peuvent évoluer en fonction de la location axiale.

Le pas desdites ondulations et/ou leur amplitude radiale peuvent évoluer en fonction de la location circonférentielle à l'intérieur de chaque compartiment.

Selon un mode de réalisation particulier, la surface radialement interne de ladite paroi périphérique comporte des canaux longitudinaux.

Selon un autre mode de réalisation, éventuellement combinable avec le précédent, la surface radialement interne de ladite paroi périphérique comporte des cuvettes entourant chacune l'embouchure d'un orifice.

Avantageusement, une pièce telle que décrite précédemment est fabriquée d'une seule pièce, par exemple par fabrication additive. La fabrication additive, notamment, correspond à des formes complexes de la paroi périphérique pour optimiser l'efficacité des motifs.

L'invention concerne également un dégazeur centrifuge d'un mélange air/huile de turbomachine comprenant une pièce telle que décrite précédemment, un arbre creux solidaire de ladite pièce et configuré pour recueillir l'air sortant de la sortie radiale interne, et un pignon de mise en rotation de l'ensemble.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig.1] la figure 1 est une vue schématique en perspective d'un dégazeur concerné par l'invention, coupé selon un plan de symétrie ;
[Fig.2] la figure 2 est une vue schématique en perspective de la pièce mobile du dégazeur de la figure 1, sortie du carter fixe et coupée selon un plan de symétrie ;
[Fig.3] la figure 3 montre schématiquement l'interaction entre l'écoulement dans le dégazeur et le film d'huile déposé sur une paroi lisse selon l'état de l'art ;
[Fig.4] la figure 4 montre schématiquement l'état du film d'huile déposé le long d'une paroi longitudinale selon un premier mode de réalisation de l'invention ;
[Fig.5] la figure 5 montre schématiquement le principe de réalisation d'un second mode de réalisation de l'invention sur une vue en perspective de l'enceinte du dégazeur de la figure 1, coupé selon un plan transversal ;
[Fig.6] la figure 6 montre très schématiquement, en coupe circonférentielle, la section des parois longitudinales pour une variante du deuxième mode de réalisation ;
[Fig.7] la figure 7 montre très schématiquement une vue latérale d'une des parois longitudinales de la figure 5 ;
[Fig.8] la figure 8 montre une vue en perspective, vue de l'avant, d'un écorché de la pièce correspondant à la variante dont le principe a été présenté sur les figures 5 et 6 ;
[Fig.9-10] la figure 9 est une vue en perspective schématique de l'intérieur de la pièce mobile de la figure 2, selon un premier mode de réalisation de l'invention, coupée par un plan transversal ; et la figure 10 montre un détail de la figure 9 ;
[Fig.11] la figure 11 montre une vue en perspective schématique d'un compartiment de l'enceinte de la pièce mobile de la figure 2, selon un deuxième mode de réalisation de l'invention, coupé par un plan transversal ;
[Fig.12] la figure 12 montre un schéma de principe de la variation de forme de la surface intérieure de la paroi périphérique de l'enceinte de la pièce de la figure 2 réalisée selon l'invention, suivant une coupe transversale ; et
[Fig.13] la figure 13 montre un schéma de principe de la variation de forme de la surface intérieure de la paroi périphérique de l'enceinte de la pièce de la figure 2 réalisée selon l'invention, suivant une coupe axiale.

### Description détaillée de l'invention

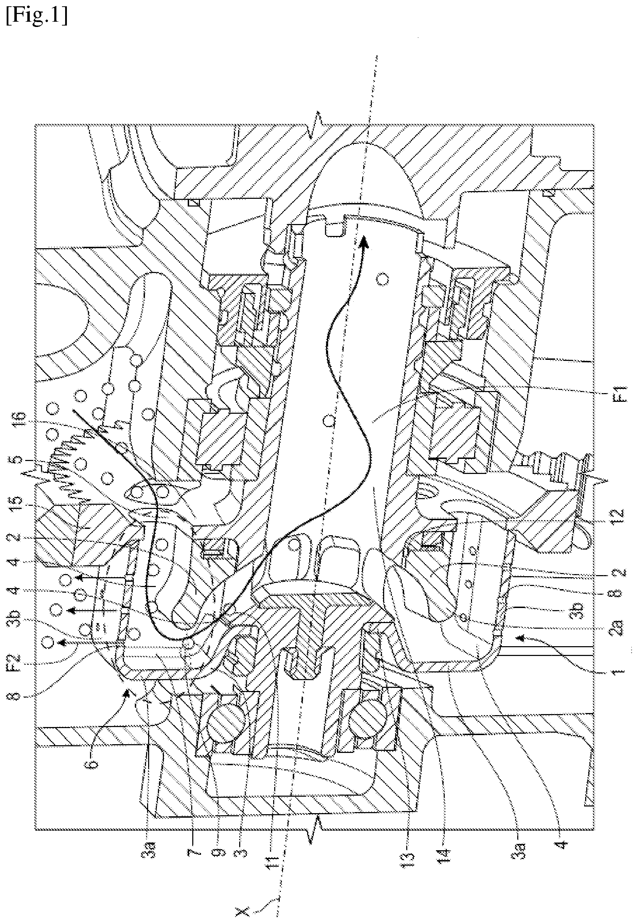

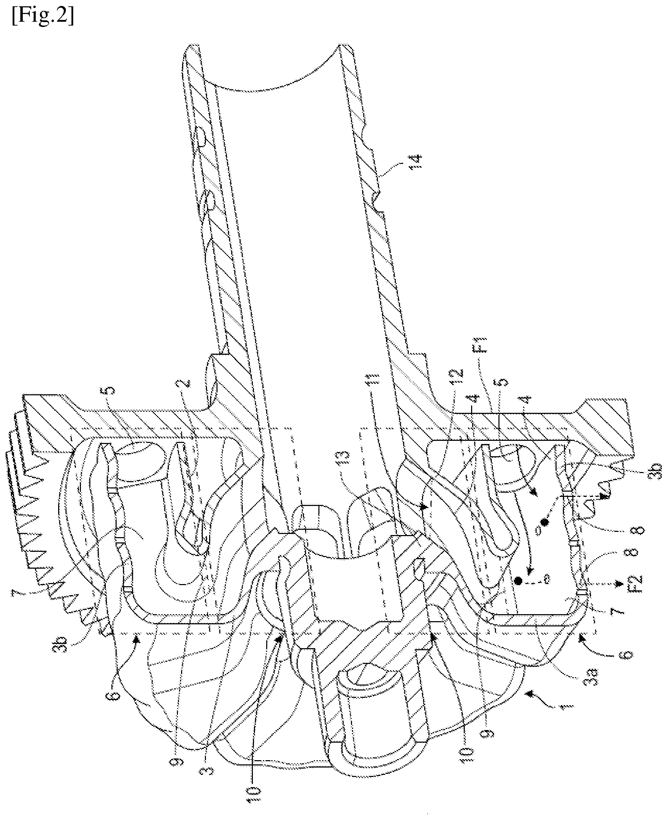

Sur les figures, les échelles et les proportions ne sont pas strictement respectées et ce, à des fins d'illustration et de clarté. Un dégazeur utilisant l'invention comprend, tel que représenté sur les figures 1 et 2, une pièce mobile 1 en rotation autour d'un axe longitudinal de symétrie X. Ladite pièce mobile 1 comporte une partie structurelle qui comprend une première coque 2 entourée d'une deuxième coque 3. L'espace entre les deux coques 2, 3, forme une veine 4 de révolution autour de l'axe central de symétrie X, destinée à faire circuler le mélange d'air et d'huile à séparer.

La veine 4 comporte une entrée axiale 5 destinée à l'entrée du mélange d'air et d'huile à séparer. Cette entrée axiale 5 correspond à une première extrémité d'une première partie 6 de la veine 4 qui s'étend essentiellement de manière axiale, en vue de centrifuger le mélange. La première partie de veine 6, qui s'étend axialement, fait office d'enceinte de centrifugation car c'est là que la force centrifuge s'exerce avec le plus de force sur le mélange air/huile. Elle est donc appelée enceinte de centrifugation 6 dans la suite de la description.

La veine 4 comprend ici en outre une pluralité de compartiments répartis circonférentiellement autour de l'axe de symétrie X. Les compartiments sont formés entre des cloisons longitudinales 7 s'étendant radialement. Avantageusement, ces cloisons axiales 7 relient la première 2 et la deuxième coque 3, formant ainsi une liaison qui les solidarise. Chaque compartiment communique avec l'entrée axiale 5 du mélange.

A sa deuxième extrémité axiale, l'enceinte de centrifugation 6 est fermée axialement par une portion 3a de la deuxième coque 3, sensiblement perpendiculaire à l'axe de symétrie X, et comporte une ouverture radiale 9 vers l'axe de symétrie X entre la première 2 et la deuxième coque 3. La deuxième coque 3 forme une paroi 3b radialement externe de l'enceinte de centrifugation 6 qui est sensiblement annulaire, entre l'entrée 5 et la partie 3a de la deuxième coque qui limite axialement l'enceinte de centrifugation 6 à sa seconde extrémité. L'enceinte de centrifugation 6 comporte une pluralité de sorties radiales 8 d'huile, sous la forme d'orifices traversants ménagés dans la paroi radialement externe 3b et est configurée pour pouvoir évacuer l'huile séparée du mélange par l'effet de la force centrifuge du dégazeur. Chaque compartiment de la veine 4 est relié à une ou plusieurs sortie(s) radiale(s) 8 d'huile.

La première coque 2 forme une paroi radialement interne des compartiments de la veine dans l'enceinte de centrifugation 6. Elle s'arrête axialement avant la portion axiale 3a de la deuxième coque 3, en partant de l'entrée 5 de la veine, pour ménager l'ouverture radiale 9 vers l'intérieur à la seconde extrémité de l'enceinte de centrifugation 6. Sa forme peut être optimisée pour favoriser la séparation de l'huile et pour minimiser les pertes de charge, notamment au niveau du coude formé au niveau de la sortie radiale. Sur l'exemple présenté, la paroi radialement interne est sensiblement annulaire en partant de l'entrée axiale 5 et comporte une extrémité axiale 2a opposée à l'entrée axiale 5 formant un bourrelet ou un plateau circonférentiel arrondi au niveau de la seconde extrémité de l'enceinte de centrifugation 6. Cette forme de l'extrémité axiale 2a de la première coque a tendance à renvoyer le fluide radialement vers l'extérieur au passage du coude formé dans la veine 4 en sortie de l'enceinte de centrifugation 6, de manière à optimiser l'écoulement du flux mélange air/huile.

La veine 4 comporte une deuxième partie 10 qui communique avec l'enceinte de centrifugation 6 par l'ouverture radiale 9 entre la première 2 et la deuxième 3 coques et qui est configurée pour guider le fluide vers une sortie radiale 11 dans un espace cylindrique vide, qui s'étend axialement entre les limites de l'enceinte de centrifugation 6. La première 2 et la deuxième 3 coques forment des colliers 12, 13, qui limitent ledit espace cylindre vide. Ces colliers 12, 13 sont configurés pour relier la pièce 1 à un arbre creux 14, qui entraîne la pièce en rotation.

La pièce 1 est utilisée dans un dégazeur qui comprend un pignon 15 de mise en rotation de la pièce, comprenant lui-même un voile 16. Sur l'exemple présenté, le voile 16 est relié solidairement à la pièce mobile 1 et comprend des ouvertures en regard de l'entrée axiale 5 pour le passage du mélange dans les compartiments de la veine 4. Le voile 16 est également relié solidairement à l'arbre creux 14.

Avantageusement, la pièce 1 est réalisée par une méthode de fabrication additive qui permet de réaliser les formes complexes de l'exemple, notamment en vue de favoriser la séparation des gouttelettes d'huile du mélange tout en minimisant les pertes de charges. La fabrication additive de l'ensemble peut se faire, de manière connue par un procédé de fusion laser contrôlée d'une poudre métallique. Cependant, l'exemple présenté n'est nullement limitatif pour la mise en oeuvre de l'invention et des méthodes de fabrication par usinage ou par fonderie peuvent également être utilisées pour des formes plus conventionnelles de la veine de passage du mélange dans la pièce mobile 1.

Comme indiqué par la flèche F1 sur la figure 1, l'air contenant de l'huile entre donc dans la pièce mobile 1 par les ouvertures du voile 16 vers l'entrée axiale 5 des compartiments de l'enceinte de centrifugation 6. Les cloisons longitudinales 7 forment des ailettes qui entraînent en rotation le mélange entrant dans les compartiments adjacents. Par effet de centrifugation, l'huile est évacuée vers l'extérieur de la pièce mobile 1 au travers des orifices 9 comme illustré par les flèches F2. Ensuite, l'air déshuilé ayant traversé l'enceinte de centrifugation 6 arrive dans l'arbre creux 14 par la sortie radiale 11 pour être évacué.

L'huile présente dans le mélange forme un brouillard composé de gouttelettes plus ou moins fines, représentées schématiquement par des points sur les figures 1 et 2. Les gouttelettes sont captées, c'est-à-dire capturées par les cloisons axiales 7 de la pièce 1 en rotation ou collées sur la paroi périphérique 3b de l'enceinte de centrifugation 6. Elles y forment un film d'huile, qui est drainé en cheminant, sous l'effet du centrifuge, le long des parois puis éjecté vers l'extérieur du dégazeur par les orifices 8 aménagés sur la paroi périphérique 3b.

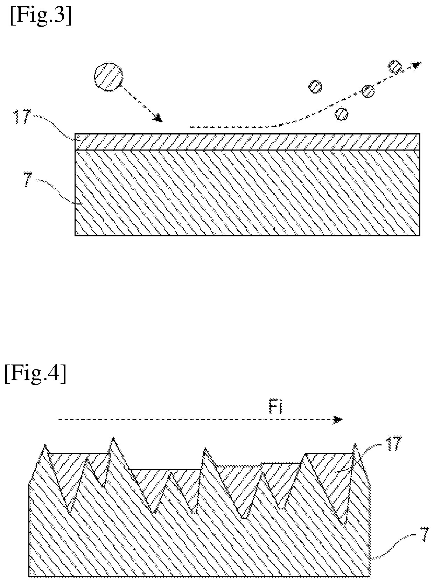

Cependant, comme indiqué sur la figure 3, sous l'effet de l'air transitant dans le dégazeur, des gouttelettes, éventuellement fines, sont arrachées du film d'huile 17 formé à la surface d'une paroi, par exemple une cloison axiale 7. Cet effet est particulièrement gênant le long des cloisons longitudinales 7. Comme la force centrifuge ne les entraîne pas directement vers la cloison 7 dont elles viennent de s'échapper, une partie de ces gouttelettes, entraînées par le flux d'air longeant la cloison 7, ne seront pas recaptées et partent dans l'arbre creux 14 par la sortie radiale 11, nuisant ainsi à la performance du dégazeur.

Selon un aspect de l'invention, la forme des cloisons axiales 7 est modifiée afin de limiter ce phénomène.

Dans un mode de réalisation particulier, illustré sur la figure 4, la surface des cloisons axiales est traitée de manière à être rugueuse. Les aspérités liées à la structure sont irrégulières mais ont une hauteur moyenne légèrement plus grande que l'épaisseur du film d'huile 17 se formant contre la cloison 7, typiquement de l'ordre du dixième de millimètre. D'une part les aspérités forment des obstacles contre lesquels les gouttelettes butent et limitent le phénomène de rebond. D'autre part, comme indiqué sur la figure 4, les aspérités créent des anfractuosités protégeant le film d'huile 17 constitué en le cachant du flux d'air Fi longeant la paroi. Le film d'huile 17 peut ensuite se frayer un chemin dans les anfractuosités pour remonter radialement vers la paroi périphérique 3b comportant les orifices de sortie 8.

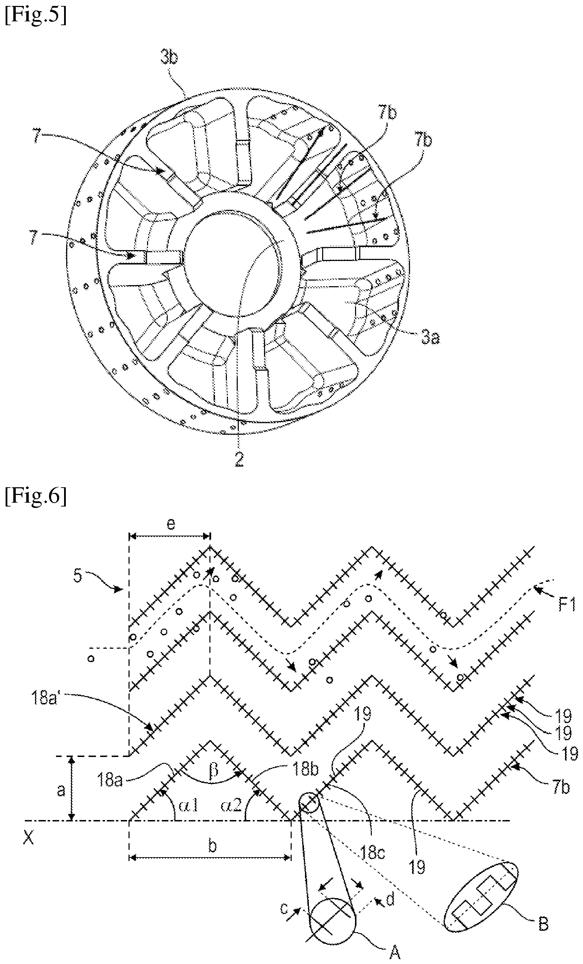

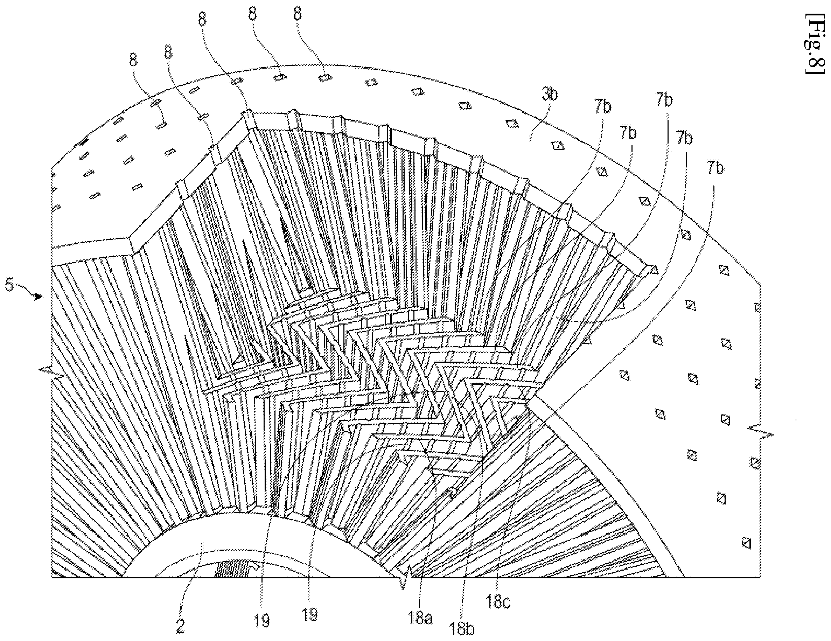

Selon un autre aspect de l'invention, comme illustré sur la figure 5, on multiplie le nombre de cloisons longitudinales 7b, de sorte que la distance entre deux cloisons 7b successives soit nettement inférieure, au moins d'un facteur trois, à l'extension radiale de l'enceinte de centrifugation 6. Si on se réfère à l'exemple de la figure 8, cette distance est au moins dix fois inférieure à l'extension radiale des cloisons 7b. En rapprochant les cloisons 7b on augmente ainsi la probabilité que les gouttelettes rebondissant d'une cloison soient captées par la cloison adjacente.

Par ailleurs, dans un mode de réalisation illustré sur les figures 6 à 8, on modifie également la surface des cloisons 7b pour améliorer la captation des gouttelettes et favoriser un écoulement du film d'huile 17 vers la paroi périphérique 3b où se trouvent les orifices de sortie 8.

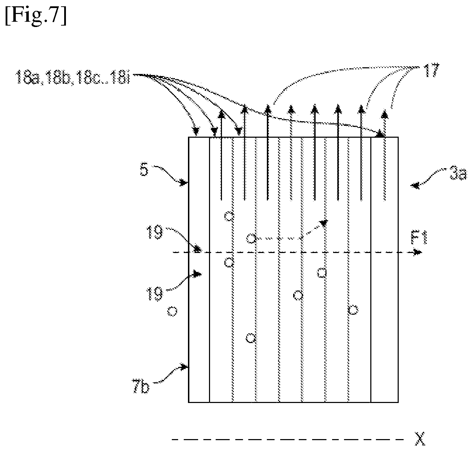

En référence aux figures 6 et 7, le profil des cloisons 7b dans le sens axial forme des ondulations sous la forme de zig-zag périodiques. Chaque cloison 7b comprend une succession de plaques planes radiales 18a, 18b, 18c.., inclinées successivement par rapport à l'axe longitudinal X d'un angle défini α₁ dans un sens, puis d'un angle α₂ dans le sens opposé. Elles forment ainsi une succession de chevrons d'extension axiale définie b et d'angle d'ouverture β = 180° - (α₁ + α₂). Les angles α₁ et α₂ n'étant pas forcément égaux, les chevrons ne sont pas forcément symétriques comme sur la figure. Sur l'exemple, en référence à la figure 7, une cloison 7b comporte neuf plaques 18a à 18i.

On notera que la distance circonférentielle a entre deux cloisons est inférieure à l'extension axiale b des chevrons et sensiblement égale à l'extension circonférentielle des chevrons. Le flux d'air F1 chargé de gouttelettes d'huiles suit donc un chemin sinueux dans la direction axiale.

Des canaux radiaux 19 sont également formés de part et d'autre sur les surfaces des plaques 18a à 18i des cloisons axiales 7b. Comme indiqué sur les figures 6 et 7, plusieurs canaux 19 sont disposés sur la surface de chaque plaque 18a à 18i, entre deux pliures de la cloison longitudinale 7b, et ces canaux s'étendent sur toute la hauteur radiale de la cloison longitudinale 7b. Plusieurs variantes sont envisageables pour former les canaux 19. L'encadré A sur la figure 6 montre une première variante dans laquelle les canaux sont formés entre des ailettes transversales sur les plaques 18a à 18i. L'encadré B sur la figure 6 montre une deuxième variante dans laquelle les plaques 18a à 18i sont minces et ont un profil crénelé. Les canaux sont alors formés par les créneaux. La figure 7 suggère une autre variante où les canaux sont creusés dans l'épaisseur des plaques 18a à 18i.

La largeur c et la profondeur d des canaux 19 est ajustée pour recueillir l'huile se déposant sur la cloison 7b et pour protéger du flux d'air F1 longeant la cloison le film d'huile 17 qui s'y forme. Compte tenu du caractère sinueux du chemin suivi par le flux F1 entre les cloisons 7b, comme illustré sur la figure 6, les gouttes d'huiles, représentées par des points, sont projetées vers les cloisons par les ondulations. Elles sont ensuite captées par les canaux radiaux 19 et, comme illustré sur la figure 7, elles y forment des films d'huile 17 qui s'écoulent le long desdits canaux vers la paroi périphérique extérieure 3b sous l'effet de la force centrifuge, tout en étant relativement protégés du flux F1.

D'une manière générale, les cloisons longitudinales 7b débutent juste derrière l'entrée axiale 5 de l'enceinte de centrifugation 6 et vont jusqu'à l'extrémité axiale opposée formée par la paroi transverse 3a.

Dans une variante, illustrée sur la figure 6, toutes les cloisons longitudinales 7b ne débutent pas dès l'entrée 5 de l'enceinte de centrifugation 6. Une ou plusieurs parties d'ondulations peuvent être supprimées. Sur la figure 6, par exemple, la première plaque 18a' de la deuxième cloison 7b en partant du bas est supprimée. Cela fait démarrer la deuxième cloison 7b à une distance e de l'entrée axiale 5. Ceci a pour avantage de ne pas saturer les canaux d'évacuation 19 dès l'entrée avec les grosses gouttes. Par ailleurs, dans des variantes non représentées, les largeurs et les profondeurs des canaux d'évacuation 19 peuvent également varier suivant la direction axiale, au fur et à mesure que l'air avance dans le dégazeur. Leurs profondeurs peuvent aussi être variables en fonction de leur implantation

La figure 8 illustre ce mode de réalisation avec une rangée annulaire serrée de cloisons longitudinales 7b. Les orifices de sortie d'huile 8 sont ici pratiqués sur la paroi extérieure 3a dans chaque compartiment entre deux closions 7b en des locations proches des points de pliure entre deux plaques 18a, 18b, ... En effet c'est au niveau de ces points de pliure que l'huile envoyée vers la paroi périphérique 3a aura tendance à s'accumuler.

L'invention ne se limite pas aux exemples présentés. Elle couvre également de nombreuses formes d'ondulations des cloisons longitudinales, ainsi que des cloisons dont les formes évoluent suivant les directions axiales et radiales. Par ailleurs, l'ensemble de ces solutions peut s'appliquer avec une riche diversité de matière pour former les cloisons longitudinales 7b : aluminium, acier, plastique, etc...

Par ailleurs, la fabrication additive permet d'adapter les cloisons 7b à des formes complexes de l'enceinte de centrifugation.

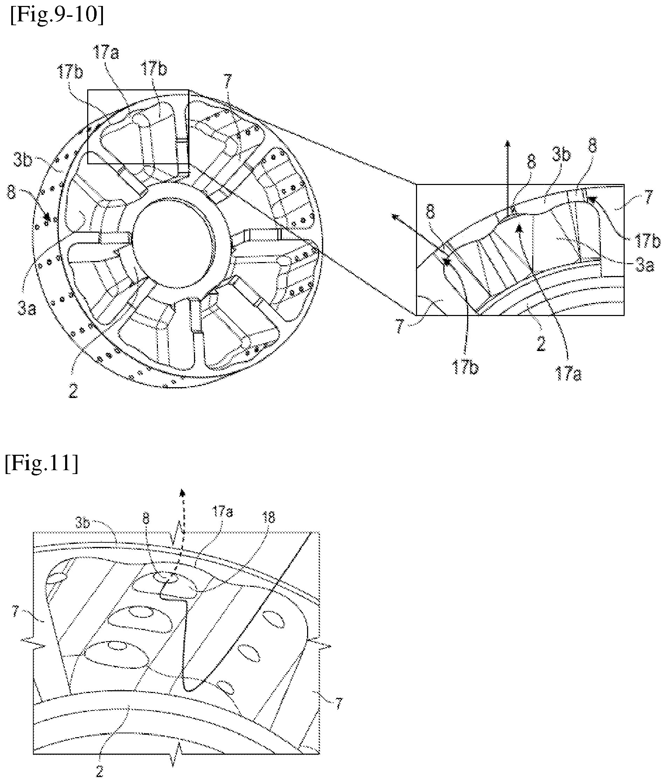

Dans le cadre du mode de réalisation représenté aux figures 9 et suivantes, la paroi périphérique 3b recueille également des gouttelettes centrifugées à l'intérieur du mélange transitant dans chaque compartiment. En fait, toute l'huile séparée du mélange par le dégazeur à l'intérieur de l'enceinte 6 est collectée par ladite paroi périphérique 3b. Il est donc important que cette huile soit drainée efficacement vers les orifices 8 aménagés sur la paroi périphérique 3b pour être éjectée vers l'extérieur du dégazeur. Cela évite qu'une poche d'huile s'accumule contre la paroi extérieure 3b, et que de l'huile risque d'en être arrachée par le flux du mélange puis de partir dans l'arbre creux 14 par la sortie radiale 11, nuisant ainsi à la performance du dégazeur. Selon l'invention, la surface radialement interne de ladite paroi périphérique 3b comporte des motifs en creux connectés à l'embouchure des orifices 8 d'évacuation, de manière à drainer l'huile recueillie par ladite paroi périphérique 3b vers lesdits orifices 8.

Dans un mode de réalisation particulier, en référence aux figures 9 et 10, la surface interne de la paroi périphérique 3b forme des rainures ou canaux longitudinaux, 17a et 17b, à l'intérieur de chaque compartiment, entre deux parois longitudinales 7. Les orifices 8 d'évacuation sont répartis en rangées axiales au fond de chaque canal, 17a ou 17b, le long de la ligne de distance radiale la plus grande dans le canal. Sur l'exemple présenté, on a dans chaque compartiment un canal central 17a et deux canaux latéraux 17b, situés près de la jonction avec les parois longitudinales 7. Les flèches de la figure 10 illustrent schématiquement le parcours de gouttelettes d'huile qui, une fois arrivées sur la paroi périphérique 3b, sont guidées par effet centrifuge vers le fond des canaux, 17a ou 17b, pour être évacuées par les orifices 8.

Dans un autre mode de réalisation, en référence à la figure 11, les orifices 8 d'évacuation sont aussi répartis en rangées axiales le long de la paroi périphérique 3b dans chaque compartiment, entre deux parois longitudinales 7. Ici, une cuvette 18 entoure chaque orifice 8 sur la surface interne de la paroi périphérique 3b. Chaque cuvette a une forme de portion de sphère creusée dans la surface interne de la paroi 3b. La figure 11 montre un exemple de réalisation où l'utilisation de cuvettes 18 autour des orifices 8 est combinée avec le précédent mode de réalisation. En effet, les cuvettes sphériques 18 sont ici creusées dans le canal central 17a d'une paroi périphérique 3b conformée préalablement comme sur les figures 9 et 10. La flèche présente dans la figure 11 illustre la façon dont une gouttelette d'huile peut être captée vers un orifice 8 par une telle paroi 3b.

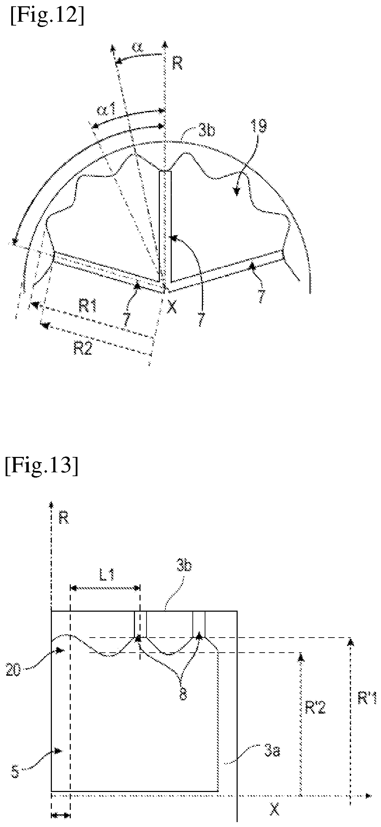

Plus généralement, en référence aux figures 12 et 13, la surface interne de la paroi périphérique 3b peut présenter des ondulations de forme variables suivant les directions circonférentielles α et axiales R.

En référence à la figure 12, les ondulations de surface dans le sens circonférentiel sont définies par un pas angulaire α₁ et une amplitude entre un rayon maximal R1 et un rayon minimal R2. Comme illustré sur la figure, le pas α₁ et les amplitudes (R1-R2) peuvent varier d'un compartiment de l'enceinte à l'autre. Le pas et l'amplitude peuvent aussi varier circonférentiellement et/ou axialement à l'intérieur d'un compartiment, pour tenir compte de la manière dont l'huile arrive sur la paroi 3b.

En référence à la figure 13, les ondulations de surface dans le sens axial sont définies par un pas longitudinal L1 et une amplitude entre un rayon maximal R'1 et un rayon minimal R'2. Le pas et les amplitudes de l'exemple de la figure 13 peuvent varier dans le sens axial. Le pas et l'amplitude peuvent aussi varier circonférentiellement et/ou axialement à l'intérieur d'un compartiment, pour tenir compte de la manière dont l'huile arrive sur la paroi 3b.

Les orifices 8 se trouvent de préférence en des endroits de rayon maximal sur la surface. Les zones de rayon maximal, 19 ou 20, présentées sur les figures 12 et 13, peuvent former des canaux longitudinaux ou transverses, ou bien des cuvettes en combinant les ondulations dans le sens axial et le sens circonférentiel. De plus, les ondulations peuvent avoir des formes sensiblement sinusoïdales comme sur les figures. Par exemple, si les orifices 8 sont répartis périodiquement sur des lignes longitudinales, comme dans le cas des figures 10 et 11, on peut combiner des ondulations circonférentielles calées sur la position des lignes longitudinales et des ondulations longitudinales calées sur la position longitudinale des orifices pour former des cuvettes centrées sur les orifices. Ces cuvettes, dont le fond est au rayon maximal R'1, sont entourées aux quatre coins par des sommets de rayon minimal R'2 et séparées par des cols entre deux sommets. Les ondulations longitudinales et circonférentielles peuvent aussi avoir des formes évolutives complexes, de manière à reproduire les canaux et/ou cuvettes sphériques présentés sur les figures 10 et 11.

De fait, l'invention ne se limite pas aux exemples reproduits sur les figures. Elle couvre toutes les variations géométriques possibles de la surface interne, telles que :
- une variation de profondeur des canaux ou cuvettes le long de leur implantation circonférentielle ou axiale,
- une variation du pas angulaire des ondulations entre deux compartiments ou au sein d'un même compartiment,
- une variation du pas axial entre deux compartiments ou au sein d'un même compartiment,
- une variation des formes de cuvettes (coniques, semi sphériques, etc...).

L'ensemble des solutions peuvent s'appliquer avec une riche diversité de matière pour former notamment la paroi périphérique 3b : aluminium, acier, plastique, etc...

Par ailleurs, la fabrication additive permet d'obtenir facilement des formes complexes de l'enceinte de centrifugation et en particulier pour la surface interne de la paroi périphérique 3b.

## Revendications

1. Pièce (1) pour un dégazeur centrifuge d'un mélange air/huile de turbomachine, destinée à tourner autour d'un axe de symétrie (X), formant une enceinte annulaire (6) de séparation centrifuge dudit mélange, l'enceinte (6) formant une veine de passage de fluide dont une entrée (5) est orientée axialement pour l'alimentation de l'enceinte (6) avec ledit mélange, et dont une première sortie (11) est orientée radialement vers l'intérieur pour la sortie de l'air déshuilé séparé dudit mélange, l'enceinte (6) comportant en outre au moins une seconde sortie d'huile (8) orientée radialement vers l'extérieur et destinée à évacuer l'huile séparée dudit mélange vers l'extérieur du dégazeur, **caractérisée en ce que** ladite enceinte (6) comporte des parois longitudinales (7) la traversant radialement, au moins l'une des surfaces desdites parois longitudinales (7) présentant des structures de surface et/ou des ondulations agencées pour former des obstacles à un flux (F1) dudit mélange longeant la surface desdites parois longitudinales.

2. Pièce (1) selon la revendication 1, **caractérisée en ce qu'**elle comporte une rangée annulaire desdites parois longitudinales (7b) formant, entre deux parois longitudinales successives, des passages du flux (F1) au travers de l'enceinte (6) dans le sens axial, la distance entre les parois longitudinales (7b) étant inférieure à leur extension radiale.

3. Pièce (1) selon l'une des revendications 1 et 2, **caractérisée en ce que** la surface des parois longitudinales (7) présente un état de surface rugueux, de manière à protéger un film d'huile du flux (F1) dudit mélange.

4. Pièce (1) selon l'une des revendications précédentes, **caractérisée en ce que** les parois longitudinales (7b) forment des plaques minces présentant des ondulations dans le sens axial.

5. Pièce (1) selon l'une des revendications précédentes, **caractérisée en ce que** des canaux (19) creusés sur au moins une des faces desdites parois longitudinales (7b) s'étendent radialement sur celle-ci, de manière à drainer un film d'huile vers une paroi périphérique externe (3b) de l'enceinte de centrifugation (6)

6. Pièce (1) selon les revendications 4 et 5, **caractérisée en ce que** plusieurs canaux (19) sont disposés entre deux pliures d'une ondulation.

7. Pièce (1) selon l'une des revendications 5 ou 6 en dépendance de la revendication 4, **caractérisée en ce que** la seconde sortie d'huile (8) comporte des orifices traversant une paroi périphérique externe (3b) de l'enceinte de centrifugation (6), positionnés dans chaque compartiment entre deux parois longitudinale (7b) au niveau des pliures entre deux ondulations.

8. Pièce (1) selon l'une des revendications précédentes, en dépendance de la revendication 2, **caractérisée en ce que** certaines parois longitudinales démarrent après les autres dans le sens axial, derrière l'entrée axiale (5).

9. Pièce (1) selon l'une des revendications précédentes, **caractérisée en ce qu'**elle est fabriquée d'une seule pièce, par exemple par fabrication additive.

10. Dégazeur centrifuge d'un mélange air/huile de turbomachine comprenant une pièce (1) selon l'une des revendications précédentes, un arbre creux (14) solidaire de ladite pièce et configuré pour recueillir l'air sortant de la sortie radiale interne (11), et un pignon (15) de mise en rotation de l'ensemble.

## Patentansprüche

1. Bauteil (1) für einen zentrifugalen Entgaser eines Luft-Öl-Gemischs einer Turbomaschine, das dazu vorgesehen ist, sich um eine Symmetrieachse (X) zu drehen, das ein ringförmiges Gehäuse (6) zur zentrifugalen Abscheidung des Gemischs bildet, wobei das Gehäuse (6) eine Fluiddurchgangsader bildet, bei der ein Eingang (5) zur Versorgung des Gehäuses (6) mit dem Gemisch axial ausgerichtet ist und bei der ein erster Ausgang (11) für das Austreten der entölen Luft, die von dem Gemisch abgeschieden ist, radial nach innen ausgerichtet ist, wobei das Gehäuse (6) weiter mindestens einen zweiten Ölausgang (8) umfasst, der radial nach außen ausgerichtet ist und dazu vorgesehen ist, das von dem Gemisch abgeschiedene Öl zur Außenseite des Entgasers abzuführen, **dadurch gekennzeichnet, dass** das Gehäuse (6) zwei Längswände (7) umfasst, die dieses radial durchqueren, wobei mindestens eine der Oberflächen der Längswände (7) Oberflächenstrukturen und/oder Wellen aufweist, die eingerichtet sind, um Hindernisse für einen Fluss (F1) des Gemischs zu bilden, die entlang der Oberfläche der Längswände verlaufen.

2. Bauteil (1) nach Anspruch 1, **dadurch gekennzeichnet, dass** es eine ringförmige Reihe der Längswände (7b) umfasst, die zwischen zwei aufeinanderfolgenden Längswänden Flussdurchgänge (F1) durch das Gehäuse (6) in der axialen Richtung bilden, wobei der Abstand zwischen den Längswänden (7b) kleiner als ihre radiale Erstreckung ist.

3. Bauteil (1) nach einem der Ansprüche 1 und 2, **dadurch gekennzeichnet, dass** die Oberfläche der Längswände (7) einen rauen Oberflächenzustand aufweist, um einen Ölfilm des Flusses (F1) des Gemischs zu schützen.

4. Bauteil (1) nach einem der vorstehenden Ansprüche, **dadurch gekennzeichnet, dass** die Längswände (7b) dünne Platten bilden, die Wellen in der axialen Richtung aufweisen.

5. Bauteil (1) nach einem der vorstehenden Ansprüche, **dadurch gekennzeichnet, dass** sich ausgehöhlte Kanäle (19) über mindestens eine der Flächen der Längswände (7b) radial über diese erstrecken, um einen Ölfilm zu einer äußeren Umfangswand (3b) des Zentrifugierungsgehäuses (6) abzuleiten

6. Bauteil (1) nach den Ansprüchen 4 und 5, **dadurch gekennzeichnet, dass** mehrere Kanäle (19) zwischen zwei Faltungen einer Welle angeordnet sind.

7. Bauteil (1) nach einem der Ansprüche 5 oder 6 in Abhängigkeit von Anspruch 4, **dadurch gekennzeichnet, dass** der zweite Ölausgang (8) Öffnungen umfasst, die eine äußere Umfangswand (3b) des Zentrifugierungsgehäuses (6) durchqueren, die in jedem Fach zwischen zwei Längswänden (7b) an den Faltungen zwischen zwei Wellen positioniert sind.

8. Bauteil (1) nach einem der vorstehenden Ansprüche, in Abhängigkeit von Anspruch 2, **dadurch gekennzeichnet, dass** gewisse Längswände nach den anderen in der axialen Richtung hinter dem axialen Eingang (5) beginnen.

9. Bauteil (1) nach einem der vorstehenden Ansprüche, **dadurch gekennzeichnet, dass** es einstückig gefertigt ist, zum Beispiel durch additive Fertigung.

10. Zentrifugaler Entgaser eines Luft-Öl-Gemischs einer Turbomaschine, umfassend ein Bauteil (1) nach einem der vorstehenden Ansprüche, eine Hohlwelle (14), die fest mit dem Bauteil verbunden ist und dazu konfiguriert ist, die aus dem inneren radialen Ausgang (11) austretende Luft zu sammeln, und ein Ritzel (15), um die Anordnung in Drehung zu versetzen.

## Claims

1. A component (1) for a centrifugal degasser for an air/oil mixture of a turbomachine, intended to rotate about an axis of symmetry (X), forming an annular enclosure (6) for centrifugal separation of said mixture, the enclosure (6) forming a fluid passage duct, one inlet (5) of which is oriented axially for supplying the enclosure (6) with said mixture, and a first outlet (11) of which is oriented radially inwards for discharging the de-oiled air separated from said mixture, the enclosure (6) further comprising at least one second oil outlet (8) oriented radially outwards and intended to discharge the oil separated from said mixture to the outside of the degasser, **characterised in that** said enclosure (6) comprises longitudinal walls (7, 7b) passing radially therethrough, at least one of the surfaces of said longitudinal walls (7, 7b) having surface structures and/or corrugations arranged to form obstacles to a flux (F1) of said mixture along the surface of said longitudinal walls.

2. The component (1) according to claim 1, **characterised in that** it comprises an annular row of said longitudinal walls (7b) forming, between two successive longitudinal walls, passages for the flux (F1) through the enclosure (6) in the axial direction, the distance between the longitudinal walls (7b) being less than their radial extension.

3. The component (1) according to one of claims 1 and 2, **characterised in that** the surface of the longitudinal walls (7) has a rough surface condition, so as to protect an oil film from the flux (F1) of said mixture.

4. The component (1) according to one of the preceding claims, **characterised in that** the longitudinal walls (7b) form thin plates having corrugations in the axial direction.

5. The component (1) according to one of the preceding claims, **characterised in that** channels (19) excavated on at least one of the faces of said longitudinal walls (7b) extend radially thereon, so as to drain an oil film towards an outer peripheral wall (3b) of the centrifugal enclosure (6).

6. The component (1) according to claims 4 and 5, **characterised in that** several channels (19) are arranged between two folds of a corrugation.

7. The component (1) according to one of claims 5 or 6, dependent on claim 4, **characterised in that** the second oil outlet (8) comprises orifices passing through an outer peripheral wall (3b) of the centrifugal enclosure (6), positioned in each compartment between two longitudinal walls (7b) at the level of the folds between two corrugations.

8. The component (1) according to one of the preceding claims, dependent on claim 2, **characterised in that** some longitudinal walls start after the others in the axial direction, behind the axial inlet (5).

9. The component (1) according to one of the preceding claims, **characterized in that** it is manufactured in one component, for example by additive manufacturing.

10. A centrifugal degasser for an air/oil mixture of a turbomachine comprising a component (1) according to one of the preceding claims, a hollow shaft (14) secured to said component and configured to collect the air leaving the internal radial outlet (11), and a pinion (15) for rotating the assembly.
